# EUROPEAN PATENT SPECIFICATION

(11) **EP 2 990 437 B1**
(45) Date of publication and mention of the grant of the patent: **04.10.2017**
(21) Application number: 14182296.5
(22) Date of filing: 26.08.2014
(51) Int. Cl.: C08K 5/01, C09D 177/08, C08G 69/26, C08G 69/34

(54) **Polyamide Hot Melt Coating**
Heißschmelzbare Polyamidbeschichtung
Revêtement thermofusible à base de polyamide

(43) Date of publication of application: 02.03.2016
(73) Proprietor: Henkel AG & Co. KGaA, 40589 Düsseldorf (DE)
(72) Inventor: Marchese, Luca, 20020 Arese (Milan) (IT); Spada, Fabio, 20841 Carate Brianza (MB) (IT); Kopannia, Siegfried, 47809 Krefeld (DE); Heucher, Reimar, 50259 Pulheim (DE)

(56) References cited:
- WO-A1-2013/135677
- WO-A2-2011/062850
- DE-A1- 10 204 228
- JP-A- H07 331 154
- US-A- 4 921 932

## Description

The present invention relates to protective or decorative coatings for articles preferably having a wooden surface, a plastic surface or a wood-plastic-composite surface. Such coatings are commonly applied on the articles by employing solvent- or water-based lacquer. Thereby the solvent or water has to be evaporated after application by using special equipment, e.g., ovens or ventilated areas. To obtain a level coating of a desired thickness, several layers have to be applied, i.e., the application and evaporation step has to be repeated for several times. For example, when a wooden article like a pencil should be coated with those techniques a desired coating is only obtained after at least six repetitions. Such a process is time consuming and additionally requires an increased storage space for the manufacturer for the bulky ovens or ventilated areas.

Moreover, the obtained coatings should have specific characteristic in order to make the articles suitable for everyday use. The coating should be scratch resistant to a certain extent, i.e., have a sufficient surface hardness without brittleness. In particular, if the article is a consumer good the surface has to be appealing to the consumer, for example has to be level, even and able to have a desirable color. Additionally the coated article should have a good feel for the surface if the article is touched while used, e.g., a toy or pencil. Moreover, it is often desired that the surface of the coated articles is further processed, e.g. by printing of texts. Thus, ink should stick to the coating.

DE 102 04 288 A1 discloses a coating agent based on thermoplastic and elastic polyamide resins optionally containing fillers and/or further additives, characterized in that it further comprises a brittle polyamide resin and/or a polyester resin. However, this document rather discloses a general concept and there is a need for coatings based on polyamides which can fulfill the above needs.

The inventors of the present invention have surprisingly found that the above-mentioned needs can be fulfilled with the specific thermoplastic coating composition of the present invention. In particular, the inventors have found, without being bound by theory, that the employment of the specific polyamide of the present invention, which contains a balance of hard and soft segments in the same backbone, provides a sufficient surface hardness, without brittleness of the final coating. Additionally, by employing the surface modification agent improved anti-scratch properties and an appealing surface of the final coating are obtained.

The present invention relates in particular to:
1. A thermoplastic coating composition comprising at least one polyamide and at least one surface modifying agent, wherein the polyamide comprises a reaction product of:
   a) at least one dimerized fatty acid;
   b) at least one mono carboxylic acid;
   c) at least one linear dicarboxylic acid; and
   d) at least one linear diamine;
   wherein the surface modifying agent is contained in 0.1 to 10 wt-%, based on the total weight of the thermoplastic coating composition;
   wherein the surface modifying agent is selected from alumina, silica, glass microspheres, waxes, perfluoro compounds, poly(meth)acrylates, fatty acid amides, polysiloxanes and combinations thereof;
   and
   wherein the composition preferably has a coefficient of friction (COF) of 0.2 to 1.1 which is measured according to ASTM D 1894.
2. The thermoplastic coating composition according to item 1, wherein the at least one mono carboxylic acid b) is selected from the group consisting of linear and branched C3 to C24 mono carboxylic acids or combinations thereof, preferably from linear and branched C12 to C18 mono carboxylic acids.
3. The thermoplastic coating composition according to item 1 or 2, wherein the at least one linear dicarboxylic acid c) is selected from the group consisting of linear C6 to C18 dicarboxylic acids and combinations thereof, preferably from linear C10 to C14 dicarboxylic acids and combinations thereof.
4. The thermoplastic coating composition according to any one of items 1 to 3, wherein the at least one linear diamine d) is selected from the group consisting of linear aliphatic diamines having C1 to C10 carbon atoms or combinations thereof, preferably from the group consisting of linear aliphatic diamines having C2 to C6 carbon atoms or combinations thereof, more preferably it is 1,2-ethylene diamine.
5. The thermoplastic coating composition according to any one of items 1 to 4, wherein the equivalent ratio of NH₂ groups of d) to the sum of the COOH groups of a) to c) is from 1.2 : 1 to 1 : 1.2.
6. The thermoplastic coating composition according to any one of items 1 to 5, wherein the surface modifying agent is contained in 0.1 to 3 wt.-%, preferably 0.1 to 0.5 wt.-%, based on the total weight of the thermoplastic coating composition.
7. The thermoplastic coating composition according to any of items 1 to 6, further comprising at least one additive, preferably selected from antioxidants, fillers, different from the surface modifying agent, pigments, plasticizers, further polymers, different from the polyamide, tackifiers, and combinations thereof, preferably in an amount of 0.1 to 20 wt.-%, based on the total weight of the thermoplastic coating composition.
8. The thermoplastic coating composition according to item 7, wherein the additives are pigments and are contained in 0.1 to 10 wt.-%, based on the total weight of the thermoplastic coating composition.
9. The thermoplastic coating composition according to any one of items 1 to 8, wherein the thermoplastic coating composition has a ring and ball softening point of 90 to 220°C, preferably 110 to 190 °C, most preferably 140 to 170 °C.
10. Use of the thermoplastic coating composition according to any of items 1 to 9 as a coating for articles preferably having a wooden surface, a plastic surface or a wood-plastic-composite surface and/or which are preferably consumer goods, more preferably writing utensils, packaging materials, toys, furniture, decorative plates, and housewares.
11. The Use according to item 10, wherein the coating is a coating for writing utensils, preferably pencils, more preferably wooden pencils.
12. A method of coating a substrate comprising the steps of
   1) melting the thermoplastic coating composition according to any one of items 1 to 9; and
   2) applying the melt of step 1) through an extruder upon a surface to be coated.
13. The method according to item 12, further comprising step
   3) cooling the coated surface of step 2) with air.
14. The method according to item 12 or 13, wherein the surface to be coated is the surface of a pencil.

In the present specification the terms "a" and "an" and "at least one" are the same as the term "one or more" and can be employed interchangeably.

In the following "CX", wherein X in an integer, refers to the amount of carbon atoms.

The polyamides can be prepared from different monomers. Preferably, the number average molecular weight is selected so that a polyamide is obtained which can be processed as melt at temperatures below 250 °C. Dimerized fatty acid, mono carboxylic acid, linear dicarboxylic acid and linear diamines are used as components of the polyamide, which are generally known to the skilled person. Preferably acid terminated polyamides are employed, more preferably linear acid terminated polyamides.

The dimerized fatty acids (compound a)), sometimes referred to in the literature as "dimer acids", are complex mixtures resulting from the polymerization of fatty acids. These dimerized fatty acids are obtained by coupling unsaturated long chain monobasic fatty acids, e.g. linoleic acid, stearic acid or oleic acid. A mixture of polymeric fatty acids can be employed as well and are those commercially available from the polymerization of tall oil fatty acids. These polymeric fatty acids preferably have the following typical composition: C18 monobasic acids (monomer) about 0 to 5 wt.-%, C36 dibasic acids (dimer) 60 to 95 wt.-%, sometimes up to about 98 wt.-%, C54 and higher polybasic acids (trimer) about 1 to 35 wt.-%, based on the total weight of the polymeric fatty acid. The relative ratios of monomer, dimer and trimer in the polymeric fatty acids depend on the nature of the starting material, the conditions of polymerization and the degree of purification. Purer grades of polymeric fatty acids are obtained by distillation and contain at least 70 %, preferably 80 % and frequently up to 95 % or even 98 wt.-% of the total weight of the dimerized fatty acid. The dimerized fatty acids may be unhydrogenated or hydrogenated.

In addition to the dimerized fatty acids, at least one mono carboxylic acid (compound b)) is employed in the preparation of the polyamide according to the present invention. In preferred embodiments the at least one mono carboxylic acid b) is selected from the group consisting of linear and branched C3 to C24 mono carboxylic acids or combinations thereof, more preferably from linear and branched C12 to C18 mono carboxylic acids or combinations thereof, most preferably from linear C14 to C18 mono carboxylic acids or combinations thereof. The carboxylic acids b) can be saturated or unsaturated, preferably they are saturated.

Furthermore, in the preparation of the polyamide at least one linear dicarboxylic acid is employed (compound c)). In preferred embodiments the at least one linear dicarboxylic acid c) is selected from the group consisting of linear C6 to C18 dicarboxylic acids and combinations thereof, more preferably from linear C10 to C14 dicarboxylic acids and combinations thereof, most preferably compound c) is a linear C14 dicarboxylic acid. The dicarboxylic acids c) can be saturated or unsaturated, preferably they are saturated.

The at least one linear diamine (compound d)) is preferably selected from one or more linear aliphatic diamines, more preferably the linear aliphatic diamines have C1 to C10 carbon atoms. Specific examples are 1,2-ethylenediamine, 1,3-diaminopropane, 1,4-diaminobutane and 1,6-hexamethylene diamine. In most preferred embodiments the linear diamine is 1,2-ethylenediamine.

The polyamides according to the invention may be prepared by conventional condensation methods and the equivalent ratio of NH₂ groups of d) to the sum of the COOH groups of a) to c) is preferably from 1.2 : 1 to 1 : 1.2., more preferably 1 : 1.2. In the majority of cases, it is preferred that residual acid groups or residual amino groups be present after the condensation, more preferred are residual acid groups.

When choosing the monofunctional, difunctional or trifunctional raw materials as monomers, the amount shall be selected so that preferably meltable, for example uncrosslinked polyamides shall be obtained. For example, if crosslinking/gelling occurs, then lowering the fraction of trifunctional components can result in polymers that do not tend to gel.

In preferred embodiments a) to c) are employed in the preparation of the polyamide as follows a) is present in 50 to 85 wt.-%; b) is present in 0.5 to 3 wt.-%; and c) is present in 5 to 30 wt.-%, based on the total weight of the polyamide. In further preferred embodiment in addition to the before mentioned ranges for a) to c), d) is present in 5 to 25 wt.-%, more preferred in 8 to 20 wt.-%.

In the present invention the surface modifying agent is selected from slip agents, anti-blocking agents or combinations thereof selected from alumina, silica, glass microspheres, waxes, perfluoro compounds, poly(meth)acrylates, fatty acid amides, polysiloxanes and combinations thereof.

Anti-blocking agents are known to the skilled person Anti-blocking agents according to the present invention are selected from alumina, silica, and glass microspheres, or combinations thereof. Exemplary alumina and silica compounds are commercially obtainable from Cabot Cooperation, Boston, e.g., under the tradenames SpectrAl^{®} and CAB-O-SIL^{®} or from Evonik Industries AG, Essen under the tradenames AEROXIDE^{®} and AEROSIL^{®}.

Slip agents are known to the skilled person. Slip agents according to the present invention are selected from waxes, perfluoro compounds, polysiloxanes, fatty acid amides and poly(meth)acrylates or combinations thereof.

The slip agent is preferably selected from waxes, perfluoro compounds, polysiloxanes, fatty acid amides, and combinations thereof, more preferably from microcrystalline waxes, polysiloxanes and fatty acid amides or combinations thereof.

Exemplary waxes suitable as slip agents comprise polyethylene wax, microcrystalline wax, paraffin wax, beeswax, carnauba wax, montan wax, candelilla wax, synthetic wax, or combinations thereof, preferably the wax is a microcrystalline wax.

The term "microcrystalline wax" is known to the skilled person and refers to a petroleum-derived wax. This microcrystalline wax is a solid at room temperature, and contains substantial proportions of branched and cyclic (naphthenes, alkyl- and naphthene substituted aromatics) hydrocarbons, in addition to saturated straight alkanes. Microcrystalline wax has a crystal lattice micro-structure characterized by the presence of strongly branched isoparaffins and naphthenes, which inhibit crystallization. Microcrystalline wax is produced from a combination of heavy oil distillates and from the sediments of paraffinic crude oil (settling waxes). Microcrystalline wax excludes animal wax, vegetal wax, bacterial wax, mineral wax, and synthetic wax. The microcrystalline paraffin wax preferably has a molecular weight of about 500 to 800 g/mol and/or a dropping point measured according to DIN ISO 2176 of 60°C to 100°C. Commercially available microcrystalline waxes are generally a mixture of straight and branched chain paraffins characterized by a higher molecular weight and a smaller crystal structure compared to other waxes. Suitable commercially available microcrystalline paraffin waxes are commercially available, e.g. under the tradename Parapi 90F from Acrites y Parafinas Industries, Mexico, under the tradename Multiwax from Witco Chemical Co or under the tradename Sasolwax, e.g., Sasolwax 0907 from Sasol Wax GmbH, Hamburg.

The methods for the preparation of fatty acid amides employed are generally known in the art. For example, fatty acid esters are commonly prepared by the reaction of an alcohol and a fatty acid or a fatty acid derivative, such as a fatty acid halide.

Exemplary fatty acid amides are saturated fatty acid monoamide (e.g., lauramide, palmitamide, arachidamide behenamide, stearamide, ethylenebis-12-hydroxy stearamide); unsaturated fatty acid monoamide (e.g., oleamide, erucamide, recinoleamide); and N-substituted fatty acid amide (e.g., N-stearyl stearamide, N-behenyl behenamide, N-stearyl behenamide, N-behenyl stearamide, N-oleyl oleamide, N-oleyl stearamide, N-stearyl oleamide, N- stearyl erucamide, erucyl erucamide, and erucyl stearamide, N-oleyl palmitamide); methylol amide (e.g., methylol stearamide, methylol behenamide); saturated fatty acid bis-amide (e.g., methylene bis-stearamide, ethylene bis-stearamide, ethylene bis-isostearamide, ethylene bis-hydroxystearamide, ethylene bis-behenamide, hexamethylene bis-stearamide, hexamethylene bis-behenamide, hexamethylene bis-hydroxystearamide, N,N'-distearyl adipamide, N,N'-distearyl sebacamide); unsaturated fatty acid bis-amide (e.g., ethylene bis-oleamide, hexamethylene bis-oleamide, N,N'-dioleyl adipamide, N,N'-dioleyl sebacamide; saturated or unsaturated fatty acid tetra amide, stearyl erucamide, ethylene bis stearamide and ethylene bis oleamide).

A large number of useful fatty acid amides are commercially available from Humko Chemical Company, Memphis, Tenn., USA under the Kemamide tradename and include, for example, Kemamide B (behenamide/arachidamide), Kemamide W40 (N,N'-ethylenebisstearamide), Kemamide P181 (oleyl palmitamide), Kemamide S (stearamide), Kemamide U (oleamide), Kemamide E (erucamide), Kemamide O (oleamide), Kemamide W45 (N,N'-ethylenebisstearamide), Kenamide W20 (N,N'-ethylenebisoleamide), Kemamide E180 (stearyl erucamide), Kemamide E221 (erucyl erucamide), Kemamide S180 (stearyl stearamide), Kemamide S221 (erucyl stearamide), and the like. In addition, useful fatty amides are commercially available from Croda Universal Ltd., Hull East Yorkshire, England, under the Crodamide tradename and include, for example, Crodamide OR (oleamide), Crodamide ER (erucamide), Crodamide SR (stereamide), Crodamide BR (behenamide), Crodamide 203 (oleyl palmitamide), Crodamide 212 (stearyl erucamide), and from Clariant AG, Muttenz, Switzerland, for example Licowax C (N,N'-ethylenebisstearamide).

Preferred fatty acid amides are selected from lauramide, palmitamide, arachidamide, behenamide, stearamide, ethylenbis-12-hydroxystearamide, oleamide, erucamide, recinoleamide, N-stearyl stearamide, N-behenyl behenamide, N-stearyl behenamide, N-behenyl stearamide, N-oleyl oleamide, N-oleyl stearamide, N-stearyl oleamide, N-stearyl erucamide, erucyl stearamide, erucyl erucamide, N-oleyl palmitamide, methylol stearamide, methylol behenamide, methylene bis-stearamide, ethylene bis-stearamide, ethylene bis-isostearamide, ethylene bis-hydroxystearamide, ethylene bis-behenamide, hexamethylene bis-stearamide, hexamethylene bis-behenamide, hexamethylene bis-hydroxystearamide, N,N'-distearyl adipamide, and N,N'-distearyl sebacamide, ethylene bis-oleamide, hexamethylene bis-oleamide, N,N'-dioleyl adipamide, and N,N'-dioleyl sebacamide and combinations thereof. In more preferred embodiments the fatty acid amide is selected from erucamide, behenamide, stearamide, oleamide and combinations thereof.

When employing poly(meth)acrylates, polymers or copolymers of alkyl acrylates having an alkyl radical chain length of 2 to 8 carbon atoms, such as ethyl acrylate, 2-ethylhexyl acrylate or n-butyl acrylate are preferred. The poly(meth)acrylates preferably have a number average molecular weight of 500 to 100,000 g/mol, more preferably 2,500 to 80,000 g/mol, most preferably 10,000 to 50,000 g/mol.

With regard to the polysiloxanes preferred compounds are selected from polydimethylsiloxanes, polymethylalkylsiloxanes, and polyether- or polyester-modified polydimethyl- or polymethylalkylsiloxanes or polyester-modified hydroxypolymethylsiloxane or a combination thereof. In some embodiments, the siloxane is a cross-linked siloxane. In the before mentioned compounds, "alkyl" preferably refers to alkanes having C1 to C10, more preferably C1 to C6, most preferably C1 to C4 carbon atoms. In some embodiments, the siloxane may be a silsesquioxane having the chemical formula RSiO_{3/2} where R is a hydrocarbon. In preferred embodiments, the hydrocarbon is a C1 to 10 hydrocarbyl, a C1 to 4 hydrocarbyl or a C1 to 2 hydrocarbyl. In one embodiment, the siloxane may be methylsilsesquioxane (MSQ). The polysiloxanes preferably have a number average molecular weight of 300 to 100,000 g/mol, more preferably 2,500 to 80,000 g/mol, most preferably 10,000 to 50,000 g/mol. Examples of commercially available siloxanes include Tospearl® 105, 120, 130, 145, 240, 1110A, 2000, 3000 from Momentive Performance Materials Inc., Albany, USA. Additionally BYK-300, BYK-301/302, BYK-306, BYK-307, BYK-310, BYK-313, BYK-315, BYK-330, BYK-331, BYK-333, BYK-337, BYK-342, BYK-370, BYK-371, BYK-375, BYK-377, BYK-378, BYK-UV3500, and BYK-UV3510 (all of which are manufactured by BYK Additives and Instruments GmbH, Wesel, Germany).

The perfluor compound is preferably selected from perfluoroalkane, perfluorocarboxylic acid ester, a perfluoro organic compound and fluorinated polymer or combinations thereof. Particularly preferred are polytetrafluorethylene, perfluoralkoxyalkane, polyvinylidene fluoride, and combinations thereof.

In the present invention the surface modifying agent is contained in 0.1 to 10 wt.-%, preferably 0.1 to 3 wt.-%, more preferably 0.1 to 0.5 wt.-%, in the coating composition based on the total weight of the thermoplastic coating composition. In more preferred embodiments the surface modifying agent is a slip agent as defined above and is contained in 0.1 to 10 wt.-%, more preferably 0.1 to 3 wt.-%, most preferably 0.1 to 0.5 wt.-%, in the coating composition, based on the total weight of the thermoplastic coating composition. In alternative, more preferred embodiments, the surface modifying agent is an anti-blocking agent as defined above and is contained in 0.1 to 10 wt.-%, more preferably 0.1 to 3 wt.-%, most preferably 0.1 to 0.5 wt.-%, in the coating composition, based on the total weight of the thermoplastic coating composition.

The thermoplastic coating composition according to the present invention preferably further comprises at least one additive, which is/are known in the art. The term "additive" includes fillers, which are different from the surface modifying agent of the present invention, dyes, thixotropic agents (e.g., urea derivatives, fibrillated or pulp short fibers), color pastes and/or pigments, conductivity additives (e.g., conductivity carbon blacks or lithium perchlorate), plasticizers, tackifiers, further polymers, which are different from the polyamide according to the present invention, stabilizers, adhesion promoters, rheological additives, catalysts, moisture scavengers and any combination thereof. More preferably the additive is selected from antioxidants, fillers, which are different from the surface modifying agent, dyes, color pastes and/or pigments, plasticizers, further polymers, different from the polyamide, tackifiers, and combinations thereof.

The coating composition according to the present invention preferably comprises 0.1 to 20 wt.-% of additives, based on the total weight of the coating composition. In more preferred embodiments 1 to 10 wt.-%, most preferably 1 to 5 wt.-%, are contained. In even more preferred embodiments the additives contained in the above mentioned ranges are selected from dyes, color pasts and/or pigments, stabilizers, adhesion promoters, plasticizers, tackifiers, polymers, which are different from the polyamide according to the invention, catalysts, moisture scavengers and combinations thereof.

In further preferred embodiments the coating composition according to the present invention comprises 0.1 to 20 wt.-%, more preferred 1 to 10 wt.-%, most preferred 1 to 5 wt.-%, based on the total weight of the coating composition, of additives selected from dyes, color pastes, pigments or combinations thereof.

The coating compositions according to the invention may contain tackifiers, such as, e.g., resins derived from abietic acid, abietic acid esters, other rosin esters, polyterpene resins, terpene/phenolic resins, styrenated terpenes, poly-α-methylstyrene, α-methylstyrene-phenolic or aliphatic, aromatic or aromatic/ aliphatic hydrocarbon resins or coumarone/indene resins or resins derived from low molecular weight polyamides. These tackifying resins may optionally contain OH groups, to improve compatibility of the different components.

The coating composition according to the present invention preferably comprises 0.1 to 20 wt.-% of at least one tackifier, based on the total weight of the coating composition. In more preferred embodiments 1 to 10 wt.-%, most preferably 1 to 5 wt.-%, are contained.

The coating compositions according to the invention may contain further polymers, different from the polyamide according to the present invention. These are preferably selected from EVA, polyurethane polymers, rubber type polymers, styrene copolymers, polyester copolymers, polycarbonates, acrylics, thermoplastic polyurethanes and combinations thereof.

The coating composition according to the present invention preferably comprises 0.1 to 20 wt.-% of at least one further polymer, different from the polyamide according to the present invention, based on the total weight of the coating composition. In more preferred embodiments 1 to 10 wt.-%, most preferably 1 to 5 wt.-%, are contained.

The coating compositions according to the invention may contain plasticizers, provided that these plasticizers do not interfere with the capability of the composition to be applied as a coating - such as phthalates, benzoates, sucrose esters and sulphonamides. By way of example there may be mentioned the liquid phthalate plasticizers, plasticizers based on aromatic esters, such as, e.g., esters of benzoic acid, or also solid plasticizers such as dicyclohexyl phthalate, cyclohexane dimethanol dibenzoate and the like. Also suitable are other plasticizers such as sucrose acetate isobutyrate, ortho-/para-toluene sulphonamide or N-ethyl-ortho-toluene sulphonamide.

The coating composition according to the present invention preferably comprises 0.1 to 20 wt.-% of plasticizers, based on the total weight of the coating composition. In more preferred embodiments 1 to 10 wt.-%, most preferably 1 to 5 wt.-% are contained.

As stabilizers different components can be used such as antioxidants, UV stabilizers, hydrolysis stabilizers. Examples for these components are sterically hindered phenols of high molecular weight, sulphur-containing and phosphorus-containing phenols or amines. This include sterically hindered phenols, polyfunctional phenols, thioether, substituted benzotriazoles, hindered benzophenone and/or sterically hindered amines. Examples of hydrolysis stabilizers include oligomeric and/or polymeric aliphatic or aromatic carbodiimides. Such components are commercially available and known to the skilled person.

As adhesion promoters, are preferably selected from the group consisting of 1,4-cyclohexylene dimethylene terephthalate, 1,4-cyclohexylene dimethylene isophthalate, alkylene-maleic anhydride copolymers, n-alkylglutarimide/acrylic copolymers, ethylene-1,4-cyclohexylene dimethylene terephthalate, ethylene-ethyl acrylate, ethylene-1,3-phenylene oxyethylene terephthalate, ethylene-methyl acrylate copolymer resins, ethylene-1,3-phenylene oxyethylene isophthalate, ethylene-vinyl acetate copolymers, ethylene-vinyl acetate-vinyl alcohol copolymers, and combinations thereof

The coating composition according to the present invention preferably comprises 0.1 to 20 wt.-% of a compound selected from stabilizer and adhesion promoters or a combination thereof, based on the total weight of the coating composition. In more preferred embodiments 1 to 10 wt.-%, most preferably 1 to 5 wt.-% are contained.

In preferred embodiments the thermoplastic coating composition according to the invention has a ring and ball softening point of 90 to 220°C, preferably 110 to 190 °C, most preferably 140 to 170 °C.

Furthermore, the present invention relates to the use of the thermoplastic coating composition according to the present invention as coating for articles preferably having a wooden surface, a plastic surface or a wood-plastic-composite surface and/or which are preferably consumer goods, more preferably writing utensils, packaging materials, toys, furniture, decorative plates, and housewares. The before mentioned object upon which the coating is to be applied can have a wooden, plastic or wood-plastic composite surface. In preferred embodiments the thermoplastic coating composition according to the present invention is used in writing utensils like pencils, color pencils, pens, felt pen, ball points, fineliner pen, rollerball pen, in more preferred embodiments the before mentioned specific examples of writing utensils have a wooden surface. Most preferably, the coating is a coating for writing utensils, preferably pencils, more preferably wooden pencils.

In further preferred embodiments the thermoplastic coating composition is used as coating in wooden toys and housewares like brooms, cutlery, tableware.

Furthermore, the present invention relates to a method of coating a substrate comprising the steps of
1) melting the thermoplastic coating composition according to the present invention; and
2) applying the melt of step 1) through an extruder upon a surface to be coated.
   In preferred embodiment the method according to the present invention further comprises the step
3) cooling the coated surface of step 2) with air. In more preferred embodiments the temperature of the air is 5 to 25°C.

In more preferred embodiments of the method of the present invention the surface to be coated is the surface of a pencil.

### Measurement methods

### Molecular weight determination (M_{w} and Mₙ)

The respective compounds/compositions were analyzed for molecular weight and molar mass distribution by Gel Permeation Chromatography (GPC) under the same chromatographic condition. The samples to be measured were dissolved under heat in dichloromethane, diluted with tetrahydrofuran and after filtration over a Styragel^{®}-column analyzed in combination with a PL-gel-mix-column. As eluent, tetrahydrofuran was employed, the detection was made via RI- and UV-detectors. The temperature of the column compartment was 35°C. The calculated weight average molecular weight (M_{w}) and number average molecular weight (Mₙ) at the peak maximum (Mₚ) in the obtained graphs refer to external calibration with polystyrene-standards.

### Melt viscosity

Melt viscosity was measured using a Brookfield Viscometer model RVDV-1+ with a Model 106 temperature controller and Thermosel unit, calibrated with viscosity standard oil. 10 to 12 g of adhesive was weighed into a disposable aluminum viscometer tube. The tube was inserted into the Viscometer and left to equilibrate for 30 minutes at 210 °C. The preheated spindle no. 27 was inserted into the adhesive and allowed to rotate for 30 minutes at 210 °C; the speed of rotation was changed according to the viscosity range measured. The initial viscosity V1 at 210°C was then measured.

### Coefficient of friction

The coefficient of friction (COF) was measured after the coating has been applied and the article has been allowed to cool to room temperature (also referred to as "immediate") or after 3 days after the preparation of the article (also referred to as "3days") according to ASTM D 1894.

### Ring and ball softening point

The ring and ball softening point of the coating composition was measured in accordance with ASTM E 28.

### Examples

The thermoplastic coating composition according to the present invention can be prepared as follows. The following examples are for illustrative purposes only and are not intended to limit the scope of the invention.

### General preparation method

In a 5-neck round bottom flask with mechanical stirrer and under inert atmosphere (nitrogen gas) all acid components (components a) to c)), an optional acid catalyst and antioxidants were added at room temperature (about 25°C) and heated to 120°C. Then the linear diamine (compound d)) was drop wise added. The system was heated to 220°C for about 1 hour and the water was distilled off under vacuum (30 mbar). Subsequently, nitrogen gas was supplied into the flask to restore atmospheric pressure and the temperature was cooled to 200°C. Then the modifying agent was added to the mixture. After 30 minutes under stirring the final molten mixture was carefully poured out of the flask into a wide non-sticky tray and allowed to cool to room temperature in order to obtain the final coating composition.

### Polyamide 1 (P1)

For polyamide 1, 85.2 wt.-% dimer fatty acid (36 carbon atoms), 1 wt.-% stearic acid (18 carbon atoms) and 3.2 wt.-% sebacic acid (10 carbon atoms) were reacted according to the above mentioned procedure with 10 wt.-% of 1,2-ethylene diamine.

### Polyamide 2 (P2)

For polyamide 2, 80.5 % wt.-% dimer fatty acid (36 carbon atoms), 1 % wt.-% stearic acid (18 carbon atoms, linear mono carboxylic acid) and 7 wt.-% tetradecandioic acid (14 carbon atoms, dicarboxylic acid) were reacted according to the above mentioned procedure with 10 wt.-% of 1,2-ethylene diamine.

**Table 1 (examples and comparative example)**

| Ex. | Polyamide | Surface modifying agent | COF | Ring & ball softening point | Viscosity at 210°C |
|---|---|---|---|---|---|
| 1 | P1 (99.3 wt.-%) | microcrystalline paraffin wax (0.2 wt.-%) | 0.34 (3days) | 156.2°C | 7600 mPas |
| 2 | P1 (98.4 wt.-%) | high surface area fumed alumina (1.0 wt.-%); microcrystalline paraffin wax (0.1 wt.-%) | 0.34 (3days) | 155.3°C | 7975 mPas |
| 3 | P1 (99.0 wt.-%) | stearyl erucamide (0.5 wt.-%) | 1.01(immediate) | Not measured | Not measured |
| | | | 0.21 (3days) | | |
| C4 | P2 (99.5 wt.-%) | none | 1.15(immediate) | 163.5°C | 7900 mPas |
| | | | 0.87 (3days) | | |
| 5 | P2 (99.2 wt.-%) | microcrystalline paraffin wax (0.3 wt.-%) | 0.76(immediate) | 163.7°C | 8850 mPas |
| | | | 0.36 (3days) | | |
| 6 | P2 (98.7 wt.-%) | microcrystalline paraffin wax (0.3 wt.-%); behenamide (0.5 wt.-%) | 0.51 (immediate) | 163.8°C | 7875 mPas |
| | | | 0.39 (3days) | | |

Example C4 is a comparative example. All examples additionally contained 0.1 wt.-% Irganox 1010 (BASF AG, Ludwigshafen, Germany) and 0.4 wt.-% Ralox 46 (Raschig GmbH, Ludwigshafen, Germany), both are antioxidants. COF and ring & ball softening point were measured as defined above.

From the experiments, it can be seen that a desired coating, having a low coefficient of friction, is only obtained by employing specific polyamides of the present invention in combination with at least one surface modifying agent.

## Claims

1. A thermoplastic coating composition comprising at least one polyamide and at least one surface modifying agent, wherein the polyamide comprises a reaction product of:
a) at least one dimerized fatty acid;
b) at least one mono carboxylic acid;
c) at least one linear dicarboxylic acid; and
d) at least one linear diamine;
wherein the surface modifying agent is contained in 0.1 to 10 wt-%, based on the total weight of the thermoplastic coating composition;
wherein the surface modifying agent is selected from alumina, silica, glass microspheres, waxes, perfluoro compounds, poly(meth)acrylates, fatty acid amides, polysiloxanes and combinations thereof;
and
wherein the composition preferably has a coefficient of friction (COF) of 0.2 to 1.1 which is measured according to ASTM D 1894.

2. The thermoplastic coating composition according to claim 1, wherein the at least one mono carboxylic acid b) is selected from the group consisting of linear and branched C3 to C24 mono carboxylic acids or combinations thereof, preferably from linear and branched C12 to C18 mono carboxylic acids.

3. The thermoplastic coating composition according to claim 1 or 2, wherein the at least one linear dicarboxylic acid c) is selected from the group consisting of linear C6 to C18 dicarboxylic acids and combinations thereof, preferably from linear C10 to C14 dicarboxylic acids and combinations thereof.

4. The thermoplastic coating composition according to any one of claims 1 to 3, wherein the at least one linear diamine d) is selected from the group consisting of linear aliphatic diamines having C1 to C10 carbon atoms or combinations thereof, preferably from the group consisting of linear aliphatic diamines having C2 to C6 carbon atoms or combinations thereof, more preferably it is 1,2-ethylene diamine.

5. The thermoplastic coating composition according to any one of claims 1 to 4, wherein the equivalent ratio of NH₂ groups of d) to the sum of the COOH groups of a) to c) is from 1.2 : 1 to 1 : 1.2.

6. The thermoplastic coating composition according to any one of claims 1 to 5, wherein the surface modifying agent is contained in 0.1 to 3 wt.-%, preferably 0.1 to 0.5 wt.-%, based on the total weight of the thermoplastic coating composition.

7. The thermoplastic coating composition according to any of claims 1 to 6, further comprising at least one additive, preferably selected from antioxidants, fillers, different from the surface modifying agent, pigments, plasticizers, further polymers, different from the polyamide, tackifiers, and combinations thereof, preferably in an amount of 0.1 to 20 wt.-%, based on the total weight of the thermoplastic coating composition.

8. The thermoplastic coating composition according to claim 7, wherein the additives are pigments and are contained in 0.1 to 10 wt.-%, based on the total weight of the thermoplastic coating composition.

9. The thermoplastic coating composition according to any one of claims 1 to 8, wherein the thermoplastic coating composition has a ring and ball softening point of 90 to 220°C, preferably 110 to 190 °C, most preferably 140 to 170 °C.

10. Use of the thermoplastic coating composition according to any of claims 1 to 9 as a coating for articles preferably having a wooden surface, a plastic surface or a wood-plastic-composite surface and/or which are preferably consumer goods, more preferably writing utensils, packaging materials, toys, furniture, decorative plates, and housewares.

11. The Use according to claim 10, wherein the coating is a coating for writing utensils, preferably pencils, more preferably wooden pencils.

12. A method of coating a substrate comprising the steps of
1) melting the thermoplastic coating composition according to any one of claims 1 to 9; and
2) applying the melt of step 1) through an extruder upon a surface to be coated.

13. The method according to claim 12, further comprising step
3) cooling the coated surface of step 2) with air.

14. The method according to claim 12 or 13, wherein the surface to be coated is the surface of a pencil.

## Patentansprüche

1. Thermoplastische Beschichtungszusammensetzung, umfassend mindestens ein Polyamid und mindestens ein oberflächenmodifizierendes Mittel, wobei das Polyamid ein Reaktionsprodukt von Folgendem umfasst:
(a) mindestens einer dimerisierten Fettsäure;
(b) mindestens einer Monocarbonsäure;
(c) mindestens einer linearen Dicarbonsäure; und
(d) mindestens einem linearen Diamin;
wobei das oberflächenmodifizierende Mittel zu 0,1 bis 10 Gew.-% bezogen auf das Gesamtgewicht der thermoplastischen Beschichtungszusammensetzung enthalten ist; wobei das oberflächenmodifizierende Mittel ausgewählt ist aus Aluminiumoxid, Siliciumoxid, Glasmikrokügelchen, Wachsen, Perfluorverbindungen, Poly(meth)acrylaten, Fettsäureamiden, Polysiloxanen und Kombinationen daraus;
und
wobei die Zusammensetzung vorzugsweise einen Reibungskoeffizienten (*coefficient of friction* - COF) von 0,2 bis 1,1 aufweist, der gemäß ASTM D 1894 gemessen wird.

2. Thermoplastische Beschichtungszusammensetzung nach Anspruch 1, wobei die mindestens eine Monocarbonsäure b) ausgewählt ist aus der Gruppe aus linearen und verzweigten C3- bis C24-Monocarbonsäuren oder Kombinationen daraus, vorzugsweise aus linearen und verzweigten C12- bis C18-Monocarbonsäuren.

3. Thermoplastische Beschichtungszusammensetzung nach Anspruch 1 oder 2, wobei die mindestens eine lineare Dicarbonsäure c) ausgewählt ist aus der Gruppe bestehend aus linearen C6- bis C18-Dicarbonsäuren und Kombinationen daraus, vorzugsweise aus linearen C10- bis C14-Dicarbonsäuren und Kombinationen daraus.

4. Thermoplastische Beschichtungszusammensetzung nach einem der Ansprüche 1 bis 3, wobei das mindestens eine lineare Diamin d) ausgewählt ist aus der Gruppe bestehend aus linearen aliphatischen Diaminen mit C1- bis C10-Kohlenstoffatomen oder Kombinationen daraus, vorzugsweise von der Gruppe bestehend aus linearen aliphatischen Diaminen mit C2- bis C6-Kohlenstoffatomen oder Kombinationen daraus, wobei es stärker bevorzugt 1,2-Ethylendiamin ist.

5. Thermoplastische Beschichtungszusammensetzung nach einem der Ansprüche 1 bis 4, wobei das Äquivalentverhältnis von NH₂-Gruppen von d) zur Summe der COOH-Gruppen von a) bis c) von 1,2 : 1 bis 1 : 1,2 beträgt.

6. Thermoplastische Beschichtungszusammensetzung nach einem der Ansprüche 1 bis 5, wobei das oberflächenmodifizierende Mittel zu 0,1 bis 3 Gew.-%, vorzugsweise 0,1 bis 0,5 Gew.-% bezogen auf das Gesamtgewicht der thermoplastischen Beschichtungszusammensetzung enthalten ist.

7. Thermoplastische Beschichtungszusammensetzung nach einem der Ansprüche 1 bis 6, ferner umfassend mindestens einen Zusatzstoff, vorzugsweise ausgewählt aus Antioxidantien, Füllstoffen, die von dem oberflächenmodifizierenden Mittel verschieden sind, Pigmenten, Weichmachern, weiteren Polymeren, die von dem Polyamid verschieden sind, Klebrigmachern und Kombinationen daraus, vorzugsweise in einer Menge von 0,1 bis 20 Gew.-% bezogen auf das Gesamtgewicht der thermoplastischen Beschichtungszusammensetzung.

8. Thermoplastische Beschichtungszusammensetzung nach Anspruch 7, wobei die Zusatzstoffe Pigmente sind und zu 0,1 bis 10 Gew.-% bezogen auf das Gesamtgewicht der thermoplastischen Beschichtungszusammensetzung enthalten sind.

9. Thermoplastische Beschichtungszusammensetzung nach einem der Ansprüche 1 bis 8, wobei die thermoplastische Beschichtungszusammensetzung einen Ring-und-Kugel-Erweichungspunkt von 90 bis 220 °C, vorzugsweise 110 bis 190 °C, am stärksten bevorzugt 140 bis 170 °C aufweist.

10. Verwendung der thermoplastischen Beschichtungszusammensetzung nach einem der Ansprüche 1 bis 9 als eine Beschichtung für Artikel, die vorzugsweise eine Holzoberfläche, eine Kunststoffoberfläche oder eine Holz-Kunststoff-Verbundwerkstoff-Oberfläche aufweisen und die vorzugsweise Verbrauchsgüter, stärker bevorzugt Schreibgeräte, Verpackungsmaterialien, Spielzeug, Möbel, Dekorplatten und Haushaltswaren sind.

11. Verwendung nach Anspruch 10, wobei die Beschichtung eine Beschichtung für Schreibgeräte, vorzugsweise Stifte, am stärksten bevorzugt Stifte aus Holz ist.

12. Verfahren zum Beschichten eines Substrats, umfassend die Schritte
1) Schmelzen der thermoplastischen Beschichtungszusammensetzung nach einem der Ansprüche 1 bis 9; und
2) Aufbringen der Schmelze aus Schritt 1) durch einen Extruder auf eine zu beschichtende Oberfläche.

13. Verfahren nach Anspruch 12, ferner umfassend Schritt
3) Abkühlen der beschichteten Oberfläche aus Schritt 2) mit Luft.

14. Verfahren nach Anspruch 12 oder 13, wobei die zu beschichtende Oberfläche die Oberfläche eines Stifts ist.

## Revendications

1. Composition de revêtement thermoplastique comprenant au moins un polyamide et au moins un agent de modification de surface, dans laquelle le polyamide comprend un produit de réaction :
(a) d'au moins un acide gras dimérisé ;
(b) d'au moins un acide monocarboxylique ;
(c) d'au moins un acide dicarboxylique linéaire ; et
(d) d'au moins une diamine linéaire ;
dans laquelle l'agent de modification de surface est contenu dans 0,1 à 10 % en poids, sur la base du poids total de la composition de revêtement thermoplastique ;
dans laquelle l'agent de modification de surface est choisi parmi l'alumine, la silice, des microsphères de verre, des cires, des composés perfluorés, des poly(méth)acrylates, des amides d'acides gras, des polysiloxanes et des combinaisons de ceux-ci ;
et
dans laquelle la composition a de préférence un coefficient de frottement (COF) de 0,2 à 1,1 qui est mesuré selon la norme ASTM D 1894.

2. Composition de revêtement thermoplastique selon la revendication 1, dans laquelle l'au moins un acide monocarboxylique b) est choisi parmi le groupe constitué d'acides monocarboxyliques C3 à C24 linéaires et ramifiés ou des combinaisons de ceux-ci, de préférence parmi des acides monocarboxyliques C12 à C18 linéaires et ramifiés.

3. Composition de revêtement thermoplastique selon la revendication 1 ou 2, dans laquelle l'au moins un acide dicarboxylique linéaire c) est choisi parmi le groupe constitué d'acides dicarboxyliques C6 à C18 linéaires et des combinaisons de ceux-ci, de préférence parmi des acides dicarboxyliques C10 à C14 linéaires et des combinaisons de ceux-ci.

4. Composition de revêtement thermoplastique selon l'une quelconque des revendications 1 à 3, dans laquelle l'au moins une diamine linéaire d) est sélectionnée parmi le groupe constitué de diamines aliphatiques linéaires ayant des atomes de carbone C1 à C10 ou des combinaisons de ceux-ci, de préférence parmi le groupe constitué de diamines aliphatiques linéaires ayant des atomes de carbone C2 à C6 ou des combinaisons de ceux-ci, de préférence la 1,2-éthylène diamine.

5. Composition de revêtement thermoplastique selon l'une quelconque des revendications 1 à 4, dans laquelle le rapport équivalent de groupes NH₂ de d) à la somme des groupes COOH de a) à c) est de 1,2 : 1 à 1 : 1,2.

6. Composition de revêtement thermoplastique selon l'une quelconque des revendications 1 à 5, dans laquelle l'agent de modification de surface est contenu dans 0,1 à 3 % en poids, de préférence 0,1 à 0,5 % en poids, sur la base du poids total de la composition de revêtement thermoplastique.

7. Composition de revêtement thermoplastique selon l'une quelconque des revendications 1 à 6, comprenant en outre au moins un additif, de préférence choisi parmi des antioxydants, des matières de charge, autres que l'agent de modification de surface, des pigments, des plastifiants, d'autres polymères, autres que le polyamide, des agents poisseux, et des combinaisons de ceux-ci, de préférence en une quantité de 0,1 à 20 % en poids, sur la base du poids total de la composition de revêtement thermoplastique.

8. Composition de revêtement thermoplastique selon la revendication 7, dans laquelle les additifs sont des pigments et sont contenus dans 0,1 à 10 % en poids, sur la base du poids total de la composition de revêtement thermoplastique.

9. Composition de revêtement thermoplastique selon l'une quelconque des revendications 1 à 8, dans laquelle la composition de revêtement thermoplastique a un point de ramollissement anneau et bille de 90 à 220 °C, de préférence de 110 à 190 °C, idéalement de 140 à 170 °C.

10. Utilisation de la composition de revêtement thermoplastique selon l'une quelconque des revendications 1 à 9 en tant que revêtement pour des articles ayant de préférence une surface en bois, une surface en plastique ou une surface composite bois-plastique et/ou qui sont de préférence des biens de consommation, idéalement des instruments d'écriture, des matériaux d'emballage, des jouets, des meubles, des plaques décoratives et des articles ménagers.

11. Utilisation selon la revendication 10, dans laquelle le revêtement est un revêtement pour des instruments d'écriture, de préférence des crayons, idéalement des crayons en bois.

12. Procédé de revêtement d'un substrat comprenant les étapes
1) de fusion de la composition de revêtement thermoplastique selon l'une quelconque des revendications 1 à 9 ; et
2) d'application de la fusion de l'étape 1) à travers une extrudeuse sur une surface à revêtir.

13. Procédé selon la revendication 12, comprenant en outre l'étape
3) de refroidissement de la surface revêtue de l'étape 2) avec de l'air.

14. Procédé selon la revendication 12 ou 13, dans lequel la surface à revêtir est la surface d'un crayon.
